# EUROPEAN PATENT APPLICATION

(11) **EP 4 749 897 A1**
(43) Date of publication of application: **27.05.2026**
(21) Application number: 25203080.4
(22) Date of filing: 18.09.2025
(51) Int. Cl.: H02M 1/00, H02M 1/32, H02M 1/34, H02M 7/487, H02M 7/5387

(54) **POWER CONVERTER, METHOD FOR CONTROLLING POWER CONVERTER, AND POWER SUPPLY SYSTEM**

(30) Priority: 26.11.2024 CN 202411709866
(71) Applicant: Sungrow Power Supply Co., Ltd., Hefei, Anhui 230088 (CN)
(72) Inventor: LI, Bijie, Hefei, 230088 (CN); YU, Yanfei, Hefei, 230088 (CN)
(74) Representative: Epping - Hermann - Fischer

(57) **Abstract**

A power converter, a method for controlling a power converter, and a power supply system are disclosed. The power converter comprises a power converting circuit and a shunt branch. A first terminal of the shunt branch is connected to an output terminal of the power converting circuit. A second terminal of the shunt branch is connected to a DC positive or negative input terminal of the power converting circuit. The shunt branch is configured to shunt a current flowing from the output terminal of the power converter circuit to the DC positive input terminal of the power converting circuit, or a current flowing from the DC negative input terminal of the power converting circuit to the output terminal of the power converter circuit, in response to the input terminal of the power converting circuit being short-circuited.

## Description

### FIELD

The present application relates to the technical field of power electronics, and in particular to a power converter, a method for controlling a power converter, and a power supply system.

### BACKGROUND

Power converters are increasingly widely applied in power electronic systems. A power converter may comprise a direct-current to direct-current converter, a direct-current to alternating-current converter, or both above.

A ground fault may occur at a direct-current (DC) side of the power converter. For example, a DC cable or a DC bus short-circuit in a photovoltaic system is shorted to the ground. Once the ground fault occurs at the DC side, a large short-circuit current would cause a significant impact on components in the power converter and thus may damage the components.

Hence, an urgent issue to be addressed is how to mitigate the impact of the short-circuit current on the power converter when there is the ground fault.

### SUMMARY

A power converter, a method for controlling a power converter, and a power supply system are provided according to embodiments of the present disclosure. Components of the power converter are subject to less impact when there is a ground fault.

In a first aspect, a power converter is provided according to embodiments of the present disclosure. The power converter comprises a power converting circuit and a shunt branch. A first terminal of the shunt branch is connected to an output terminal of the power converting circuit. A second terminal of the shunt branch is connected to a direct-current (DC) positive input terminal of the power converting circuit, and the shunt branch is configured to shunt a current flowing from the output terminal of the power converter circuit to the DC positive input terminal of the power converting circuit in response to the DC positive input terminal or a DC negative input terminal of the power converting circuit being short-circuited; or the second terminal of the shunt branch is connected to the DC negative input terminal of the power converting circuit, and the shunt branch is configured to shunt a current flowing from the DC negative input terminal of the power converting circuit to the output terminal of the power converter circuit in response to the DC negative input terminal or the DC positive terminal of the power converting circuit being short-circuited.

In an embodiment, the shunt branch comprises unidirectional conduction circuitry that blocks a reverse current. In a case that the second terminal of the shunt branch is connected to the DC positive input terminal of the power converting circuit, a positive terminal of the unidirectional conduction circuitry is connected to the first terminal of the shunt branch, and a negative terminal of the unidirectional conduction circuitry is connected to the second terminal of the shunt branch. In a case that the second terminal of the shunt branch is connected to the DC negative input terminal of the power converting circuit, a positive terminal of the unidirectional conduction circuitry is connected to the second terminal of the shunt branch, and a negative terminal of the unidirectional conduction circuitry is connected to the first terminal of the shunt branch.

In an embodiment, the unidirectional conduction circuitry comprises at least one of: a diode or a controllable switch configured for blocking the reverse current.

In an embodiment, the power converting circuit comprises at least one of a DC-DC converting circuit or a DC-alternating-current (DC-AC) converting circuit.

In an embodiment, the power converting circuit comprises the DC-DC converting circuit and the DC-AC converting circuit. An input terminal of the DC-DC converting circuit is configured for connecting to a DC source, an output terminal of the DC-DC converting circuit is connected to an input terminal of the DC-AC converting circuit, and an output terminal of the DC-AC converting circuit serves as the output terminal of the power converting circuit.

In an embodiment, the power converting circuit comprises the DC-DC converting circuit. The DC-DC converting circuit comprises a diode connected to the DC positive input terminal, and a forward direction of the diode points from the DC positive input terminal to an output terminal of the DC-DC converting circuit. The second terminal of the shunt branch is connected to the DC negative input terminal.

In an embodiment, the power converting circuit comprises the DC-DC converting circuit. The DC-DC converting circuit comprises a diode connected to the DC negative input terminal, and a forward direction of the diode points from an output terminal of the DC-DC converting circuit to the DC negative input terminal. The second terminal of the shunt branch is connected to the DC positive input terminal.

In an embodiment, the power converting circuit is a single-stage power converting circuit comprising the DC-AC converting circuit. An input terminal of the DC-AC converting circuit is configured for connecting a DC source, and an output terminal of the DC-AC converting circuit is configured for connecting a power grid or a load. The shunt branch comprises a first shunt branch and a second shunt branch. A first terminal of the first shunt branch is connected to the output terminal of the power converting circuit, and a second terminal of the first shunt branch is connected to a positive terminal of the input terminal of the DC-AC converting circuit. A first terminal of the second shunt branch is connected to the output terminal of the power converting circuit, and a second terminal of the second shunt branch is connected to a negative terminal of the input terminal of the DC-AC converting circuit.

In an embodiment, the power converting circuit comprises the DC-AC converting circuit, and the power converter further comprises a filtering inductor. A first terminal of the filtering inductor is connected to an output terminal of the DC-AC converting circuit, and a second terminal of the filtering inductor serves as the output terminal of the power converting circuit.

In an embodiment, the shunt branch comprises the controllable switch that is configured for blocking the reverse current, and the shunt branch is connected between the output terminal of the power converting circuit and the DC positive input terminal of the power converting circuit. The power converter further comprises a controller configured for turning on the controllable switch in a positive half-cycle of a grid voltage.

In an embodiment, the shunt branch comprises the controllable switch that is configured for blocking the reverse current, and the shunt branch is connected between the output terminal of the power converting circuit and the DC positive input terminal of the power converting circuit. The power converter further comprises a controller configured for turning on the controllable switch in a negative half-cycle of a grid voltage.

In an embodiment, an alternating-current side of the power converter comprises N phases, N is an integer greater than or equal to 1, a quantity of the shunt branches is N, and the N shunt branches are for the N phases, respectively.

In a second aspect, a method for controlling a power converter is provided according to embodiments of the present disclosure. The power converter comprises a shunt branch, and the shunt branch comprises at least one controllable switch, each of which is configured for blocking a respective reverse current. The method comprises at least one of: turning on a first controllable switch of the at least one controllable switch in a positive half-cycle of a grid voltage in response to a short-circuit of a direct-current (DC) positive input terminal of the power converting circuit, where the first controllable switch is connected between an output terminal of the power converter and the DC positive input terminal of the power converter; or turning on a second controllable switch of the at least one controllable switch in a negative half-cycle of a grid voltage in response to a short-circuit of a DC negative input terminal of the power converting circuit, where the second controllable switch is connected between an output terminal of the power converter and the DC negative input terminal of the power converter.

In a third aspect, a power supply system is provided according to embodiments of the present disclosure. The power supply system comprises any forgoing power converter. A direct-current (DC) side of the power converter is configured for connecting a DC power source, and the DC power source is at least one of a photovoltaic panel or a battery.

Herein an impact of a short-circuit current on internal components of the power converter are reduced when there is a ground fault in the power converter. The shunt branch is provided between the output terminal of the power converting circuit and the DC positive/negative input terminal of the power converter. Hence, a current can be shunted via the shunt branch when a ground fault occurs at the DC side. That is, the shunt branch provides a path for the short-circuit current. The internal components of the power converting circuit can thus be protected because the current flowing through these components is reduced. As example, the semiconductor components are less likely to fail due to overcurrent.

### BRIEF DESCRIPTION OF THE DRAWINGS

FIG. 1 is a schematic diagram of a power converter according to an embodiment of the present disclosure.
FIG. 2A is a schematic diagram of a power converter according to another embodiment of the present disclosure.
FIG. 2B is a schematic diagram of a power converter according to another embodiment of the present disclosure.
FIG. 3 is a schematic diagram of a power converter in which a direct-current to direct-current (DC-DC) converting circuit is a boost-converter circuit according to an embodiment of the present disclosure.
FIG. 4 is a schematic diagram of a power converter in which a direct-current to alternating-current (DC-AC) converting circuit is a T-type inverter circuit according to an embodiment of the present disclosure.
FIG. 5 is a schematic diagram of a power converter in which a DC-DC converting circuit is a boost-converter circuit according to another embodiment of the present disclosure.
FIG. 6 is a schematic diagram of a power converter in which a DC-AC converting circuit is a T-type inverter circuit according to another embodiment of the present disclosure.
FIG. 7 is a schematic diagram of a power converter in which a shunt branch comprises a unidirectional thyristor according to an embodiment of the present disclosure.
FIG. 8 is a schematic diagram of a power converter in which a shunt branch comprises a unidirectional thyristor according to another embodiment of the present disclosure.
FIG. 9 is a schematic diagram of a power converter in which a shunt branch comprises a bidirectional thyristor according to an embodiment of the present disclosure.
FIG. 10 is a schematic diagram of a power converter in which a shunt branch comprises a bidirectional thyristor according to another embodiment of the present disclosure.
FIG. 11 is a schematic diagram of a power converter in which a DC-AC converting circuit is a passive neutral-point-clamped circuit according to an embodiment of the present disclosure.
FIG. 12 a schematic diagram of a power converter in which a DC-AC converting circuit is an active neutral-point-clamped circuit according to an embodiment of the present disclosure.
FIG. 13 is a schematic diagram of a power converter in which a DC-AC converting circuit is a highly efficient and reliable inverter concept (HERIC) circuit according to an embodiment of the present disclosure.
FIG. 14 is a schematic diagram of a power converter in which a DC-AC converting circuit is a passive neutral-point-clamped circuit according to another embodiment of the present disclosure.
FIG. 15 a schematic diagram of a power converter in which a DC-AC converting circuit is an active neutral-point-clamped circuit according to another embodiment of the present disclosure.
FIG. 16 is a schematic diagram of a power converter in which a DC-AC converting circuit is a HERIC circuit according to another embodiment of the present disclosure.
FIG. 17 is a schematic diagram of a power converter according to another embodiment of the present disclosure.
FIG. 18 is a schematic diagram of a power converter according to another embodiment of the present disclosure.
FIG. 19 is a schematic diagram of a power supply system according to an embodiment of the present disclosure.
FIG. 20 is a flowchart of a method for controlling a power converter according to an embodiment of the present disclosure.

### DETAILED DESCRIPTION

Hereinafter embodiments of the present disclosure are described in detail in conjunction with the drawings to clarify and elucidate objectives, features, and advantages of the present disclosure.

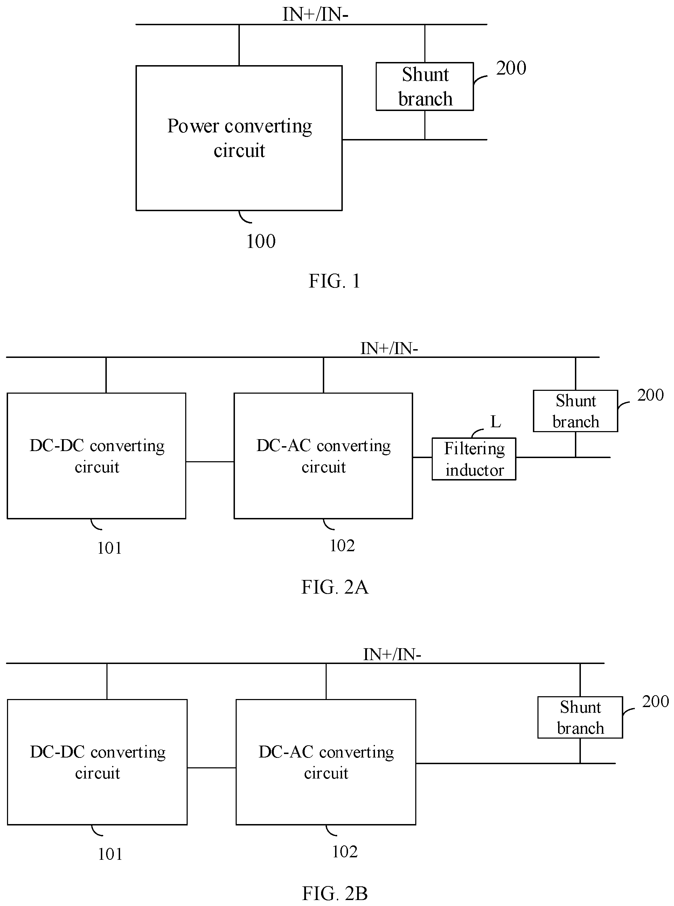

Reference is made to FIG. 1, which is a schematic diagram of a power converter according to an embodiment of the present disclosure.

In an embodiment, a power converter is provided. The power converter comprises a power converting circuit 100 and a shunt branch 200.

Topology and a type of the power converting circuit is not specifically limited here. For example, the power converting circuit 100 may comprise only a direct-current to direct-current (DC-DC) circuit, comprise only a direct-current to alternating-current (DC-AC) circuit, or may comprise both the DC-DC converting circuit and the DC-AC converting circuit. A location of connecting the shunt branch may depend on the topology of the power converting circuit and is not specifically limited here.

A first terminal of the shunt branch 200 is connected to an output terminal of the power converting circuit 100, and a second terminal of the shunt branch 200 is connected to a direct-current (DC) positive input terminal IN+ of the power converting circuit or a DC negative input terminal IN- of the power converting circuit.

In some embodiments, the second terminal of the shunt branch 200 is connected to the DC positive input terminal IN+, and the shunt branch 200 is configured for shunting a current flowing from the output terminal of the power converting circuit 100 to the DC positive input terminal IN+ of the power converting circuit 100.

In some embodiments, the second terminal of the shunt branch 200 is connected to the DC negative input terminal IN-, and the shunt branch 200 is configured for shunting a current flowing from the DC negative input terminal IN- of the power converting circuit 100 to the output terminal of the power converting circuit 100.

Herein a specific form of the shunt branch is not limited. The shunt branch is configured to provide a path for shunting current when a ground fault occurs at the DC side of the power converter. Thus, the current flowing through the power converting circuit is decreased, and the components in the power converting circuit are protected.

In some embodiments, the shunt branch provides a unidirectional conduction path for the short-circuit current, and the short-circuit current is cut off in a reverse direction of the shunt branch, that is, the short-circuit current flowing in the reverse direction is not permitted to pass the shunt branch. The shunt branch may comprise unidirectional conduction circuitry configured for blocking the reverse current while passing the forward current.

In some embodiments, the second terminal of the shunt branch is connected to the DC positive input terminal of the power converting circuit. A positive terminal of the unidirectional conduction component is connected to an output terminal of the power converting circuit, and a negative terminal of the unidirectional conduction component is connected to the DC positive input terminal. In some alternative embodiments, the second terminal of the shunt branch is connected to the DC negative input terminal of the power converting circuit. The positive terminal of the unidirectional conduction component is connected to the DC negative input terminal, and the negative terminal of the unidirectional conduction component is connected to the output terminal of the power converting circuit.

The unidirectional conduction component may comprise a unidirectional conduction component or a unidirectional conduction circuit. The unidirectional conduction component comprises a diode and/or a controllable switch configured for blocking the reverse current. The unidirectional conduction circuit refers to a circuit capable of blocking the reverse current, where the circuit comprises the diode and/or the controllable switch. It is appreciated that the unidirectional conduction circuit may comprise both the diode and the controllable switch, may comprise multiple diodes, or may comprise multiple controllable switches. When the unidirectional conduction circuit comprises the controllable switch(es), the power converter may further comprise a drive circuit of the controllable switch(es). A connection manner of the multiple diodes or the multiple controllable switches are not specifically limited here. The connection manner may be series connection, parallel connection, or a combination of the two.

Hence, the shunt branch may comprise the diode and/or the controllable switch configured for blocking the reverse current. Other components in the shunt branch are not limited here. As an example, the shunt branch may comprise only the diode, only the controllable switch, or both the diode and the controllable switch.

The diode is a unidirectional conduction component on which control is not necessary. Hence, the diode may be connected directly between the output terminal of the power converting circuit 100 and the DC positive input terminal IN+, or between the DC negative input terminal IN- and the output terminal of the power converting circuit 100.

The shunt branch is provided between the output terminal of the power converting circuit and the DC positive/negative input terminal of the power converting circuit. Hence, besides following through the power converting circuit, the short-circuit current can flow through the shunt branch when the ground fault occurs at the DC side. That is, the shunt branch provides a path for shunting the short-circuit current. The current flowing through the power converting circuit is thus reduced, so that the components in the power converting circuit can be protected. For example, the semiconductor components are less likely to fail due to overcurrent.

Hereinafter it is taken as an example that the power converting circuit comprises the DC-DC converting circuit and the DC-AC converting circuit.

Reference is made to FIG. 2A, which is a schematic diagram of a power converter according to another embodiment of the present disclosure. The power converting circuit comprises a DC-DC converting circuit 101 and a DC-AC converting circuit 102.

A first terminal (e.g., an input terminal) of the DC-DC converting circuit 101 is configured for connecting a DC source, and a second terminal (e.g., an output terminal) of the DC-DC converting circuit 101 is connected to a first terminal (e.g., an input terminal) of the DC-AC converting circuit 102. A second terminal (e.g., an output terminal) of the DC-AC converting circuit 102 is connected to a first terminal of a filtering inductor L. A second terminal of the filtering inductor L serves as the output terminal of the power converting circuit, that is, the shunt branch is connected to the second terminal of the filtering inductor L.

When the power converting circuit comprises the DC-DC converting circuit, whether the second terminal of the shunt branch is connected to the DC positive input terminal or the DC negative input terminal depends on whether a diode in the DC-DC converting circuit is connected to the DC positive input terminal or the DC negative input terminal. Since such diode is unidirectionally conducting, the shunt branch is connected to a DC terminal (or a DC bus) that is not connected to such diode. Otherwise, the diode in the DC-DC converting circuit would block the current flowing through in the shunt branch. In an embodiment, the diode in the DC-DC converting circuit is connected to the DC positive input terminal, and the second terminal of the shunt branch is connected to the DC negative input terminal. In alternative embodiment, the diode in the DC-DC converting circuit is connected to the DC negative input terminal, and the second terminal of the shunt branch is connected to the DC positive input terminal.

Reactance of the filtering inductor L results in a voltage drop, which would affect current shunting when the filtering inductor is located in the shunt branch 200. Hence, a manner of connecting the shunt branch 200 to the second terminal of the filtering inductor L can improve a shunting effect on the short-circuit current to the greatest extent. Better protection can be provided on the power converter.

As an alternative embodiment, the above filtering inductor L is absent, and the shunt branch is directly connected to the second terminal of the DC-AC converting circuit 102. Reference is made to FIG. 2B, where the first terminal of the shunt branch 200 is connected to the second terminal of the DC-AC converting circuit 102, and the first terminal of the shunt branch 200 is connected to the DC positive input terminal IN+ or the DC negative input terminal IN-.

When the ground fault occurs at the DC side, the current flowing through the power converting circuit and the current flowing through the shunt branch depends on an impedance ratio. The impedance ratio refers to a ratio of the impedance of the power converting circuit to the impedance of the shunt branch. Generally, the filtering inductor is provided at the output terminal of the power converting circuit, and the impedance of the power converting circuit is a sum of an on-state impedance of the anti-parallel diode(s) of the switching transistor(s) in the power converting circuit and the impedance of the filtering inductor. The impedance of the shunt branch is the on-state impedance of the shunt branch. As an example, the shunt branch comprises a diode, and the on-state impedance of the shunt branch is on-resistance of the diode. The current flowing through each path would increase as the impedance of such path decreases.

Hereinafter it is taken as an example that the DC-DC converting circuit is a boost converter circuit.

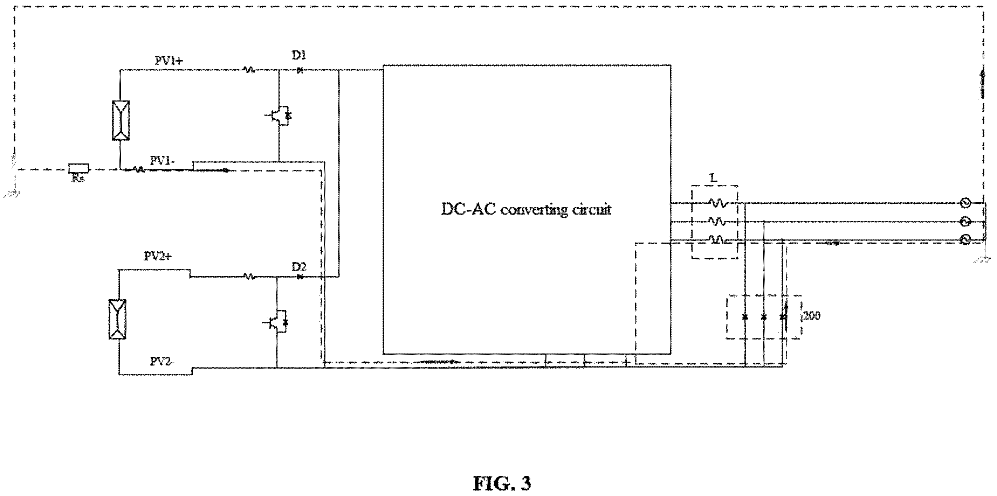

Reference is made to FIG. 3, which is a schematic diagram of a power converter in which a DC-DC converting circuit is a boost converter circuit according to an embodiment of the present disclosure.

In some embodiments, the DC-DC converting circuit comprises the boost converter circuit. A quantity of the boost converter circuits connected to the first terminal of the DC-AC converting circuit is not limited here. The first terminal of the DC-AC converting circuit may be connected to a single Boost converter circuit or multiple Boost converter circuits that are parallel. FIG. 3 shows an example that the first terminal of the DC-AC converting circuit is connected to two parallel boost converter circuits. The two boost converter circuits are called a first boost converter circuit and a second boost converter circuit, respectively. A cathode of a first diode D1 in the first boost converter circuit is connected to a DC positive input terminal of the DC-AC converting circuit, and a cathode of a second diode D2 in the second boost converter circuit is also connected to the DC positive input terminal of the DC-AC converting circuit.

FIG. 3 shows an example in which a single photovoltaic panel is connected to the input terminal of each boost converter circuit. It is appreciated that the input terminal of each Boost converter circuit may be connected to more photovoltaic panels, of which a specific quantity is not limited here.

A first terminal of the first boost converter circuit serves as its input terminal, that is, a positive input terminal of the first boost converter circuit is connected to a positive electrode PV1+ of a first photovoltaic panel, and a negative input terminal of the first boost converter circuit is connected to a negative electrode PV1- of the first photovoltaic panel. A first terminal of the second boost converter circuit serves as its input terminal, that is, a positive input terminal of the second boost converter circuit is connected to a positive electrode PV2+ of the second photovoltaic panel, and a negative input terminal of the second boost converter circuit is connected to a negative electrode PV2- of the second photovoltaic panel.

In some embodiments, the alternating-current (AC) side of the power converter is connected to a multi-phase (e.g., three-phase as shown in FIG. 3) power grid, and the shunt branch is correspondingly a multi-phase (e.g., three-phase as shown in FIG. 3) shunt branch. The first terminals of the multi-phase shunt branch are connected to multiple output terminals, respectively, for multiple phases of the power converting circuit. The second terminals of the multi-phase shunt branch are connected to the DC negative input terminal of the power converting circuit. FIG. 3 shows an example in which the shunt branch comprises a diode for each phase. In an embodiment, each second terminal of the DC-AC converting circuit is connected to a first terminals of the respective filtering inductor L, and the shunt branch 200 is connected between the second terminals of the filtering inductors L and the DC negative input terminal.

In an alternative embodiment, the power converter may be a single-phase power converter configured for connecting a single-phase power grid, and the shunt branch is a single-phase shunt branch. The structure and the working principle of such shunt branch may refer to those of the three-phase power converter and are not repeated herein.

In FIG. 3, the cathode of the diode D1 and the cathode of the diode D2 in the two boost converter circuits are both connected to the DC positive input terminal, and thus the shunt branch 200 is connected between the DC negative input terminal and the output terminal of the power converting circuit. When the negative electrode of the DC side is subject to a ground fault, paths of the short-circuit current are indicated by dashed lines in FIG. 3. The short-circuit current flows from the DC negative input terminal to the second terminal of the shunt branch 200, via the shunt branch 200 to the first terminal of the shunt branch 200, and then via the power grid to the DC negative input terminal of the boost converter circuit. Impedance between the ground and the DC negative input terminal is denoted by Rs.

As indicated the dashed lines, the short-circuit current can flow through the shunt branch 200, and thus the shunt branch 200 shunts the short-circuit current effectively and reduces the current flowing through the switching transistors in the DC-AC converting circuit. Safety of the components in the power converter is effectively ensured.

Topology of the DC-AC converting circuit is not specifically limited here. For example, the DC-AC converting circuit may comprise at least one of a T-type inverter circuit, a neutral-point-clamped (NPC) inverter circuit, or a high efficiency and reliable inverter concept (HERIC) circuit.

Hereinafter it is taken as an example that the DC-AC converting circuit comprises the T-type inverter circuit.

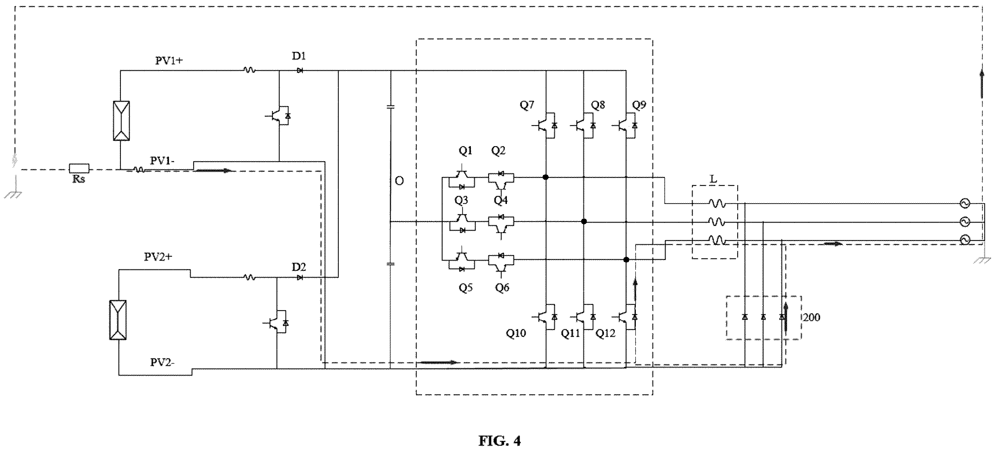

Reference is made to FIG. 4, which is a schematic diagram of a power converter in which a DC-AC converting circuit is a T-type inverter circuit according to an embodiment of the present disclosure.

In FIG. 4, the DC-AC converting circuit is a three-phase T-type inverter circuit, and two "horizontal" switching transistors connected in series and two "longitudinal" switching transistors connected in series are provided for each phase. The two longitudinal switching transistors form a bridge arm. The horizontal switching transistors for phase A comprise a first switching transistor Q1 and a second switching transistor Q2 connected in series. The horizontal switching transistors for phase B comprise a third switching transistor Q3 and a fourth switching transistor Q4 connected in series. The horizontal switching transistors for phase C comprise a fifth switching transistor Q5 and a sixth switching transistor Q6 connected in series. The longitudinal switching transistors for phase A comprise a seventh switching transistor Q7 and a tenth switching transistor Q10 connected in series. The longitudinal switching transistors for phase B comprise an eighth switching transistor Q8 and an eleventh switching transistor Q11 connected in series. The longitudinal switching transistors for phase C comprise a ninth switching transistor Q9 and a twelfth switching transistor Q12 connected in series. Details of the topology of the T-type inverter circuit may refer to the related art and are not illustrated herein.

Paths of the short-circuit current are indicated by dashed lines in FIG. 4. A first short-circuit current flows from the DC negative input terminal to the second terminal of the shunt branch 200, then flows through the shunt branch 200 to the first terminal of the shunt branch 200, then via the power grid to the DC negative input terminal of the boost converter circuit. A second short-circuit current flows from the DC negative input terminal to the first terminal of the filtering inductor L via the twelfth switching transistor Q12 of the T-type inverter circuit and then merges with the first short-circuit current. The paths for other phases can be obtained by analogy and are not repeated herein.

As shown by the dashed lines, a part of the short-circuit current can flow through the shunt branch 200, such that the shunt branch 200 shunts the short-circuit current effectively and reduces the current flowing through the switching transistors in the T-type inverter circuit. Safety of the components in the power converter is effectively ensured.

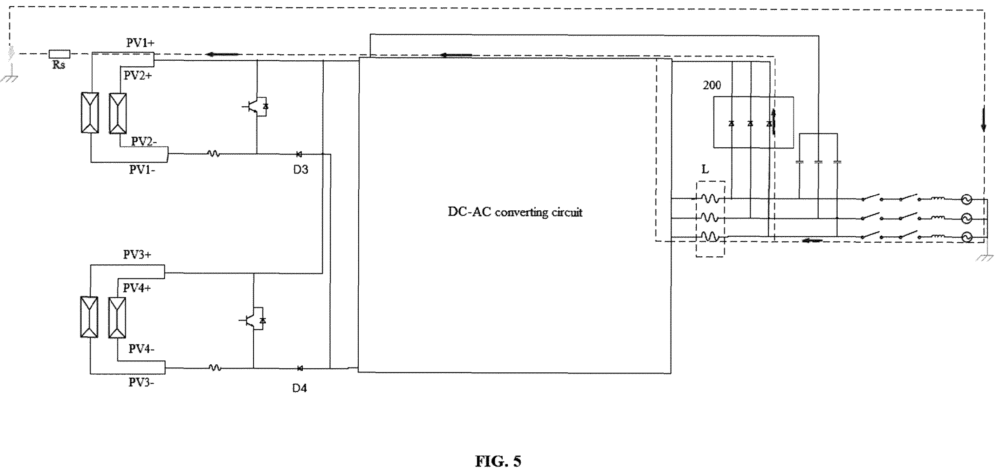

Hereinafter illustrated is another example in which the DC-DC converting circuit comprises the boost converter circuit symmetrical to that as shown above. A diode in such "mirror" Boost converter circuit is connected to the DC negative input terminal, and the shunt branch is connected between the output terminal of the power converting circuit and the DC positive input terminal of the power converting circuit. Each DC-AC converting circuit as shown in FIGs. 5 to 10 may be, for example, the T-type inverter circuit as shown in FIG. 4, and hence its details may refer to the above description and would not be repeated herein.

Reference is made to FIG. 5, which is a schematic diagram of a power converter in which a DC-DC converting circuit is a Boost converter circuit according to another embodiment of the present disclosure. The power converter comprises multiple (e.g., two) DC-DC converting circuits. The first terminals of the DC-DC converting circuits are configured for connecting respective DC sources, and the second terminals of the DC-DC converting circuits are connected in parallel.

The DC converting circuit as shown in FIG. 5 is a mirrored version of that as shown in FIG. 3. Moreover, each boost converter circuit in FIG. 3 is connected to only one photovoltaic panel, while each boost converter circuit in FIG. 5 is connected to two photovoltaic panels. It is appreciated that a quantity of photovoltaic panel(s) connected to each DC-DC converting circuit may be one or more, which is not limited here. In a case that multiple photovoltaic panels are connected to one boost converter circuit, the multiple photovoltaic panels are connected in parallel.

As shown in FIG.5, a positive input terminal of a first boost converter circuit is connected to a positive electrode PV1+ of a first photovoltaic panel and a positive electrode PV2+ of a second photovoltaic panel, and a negative input terminal of the first boost converter circuit is connected to a negative electrode PV1- of the first photovoltaic panel and a second photovoltaic panel PV2- of the second photovoltaic panel. Similarly, a first terminal of a second boost converter circuit serves as its input terminal. That is, a positive input terminal of the second boost converter circuit is connected to a positive electrode PV3+ of a third photovoltaic panel and a positive electrode PV4+ of a fourth photovoltaic panel, and a negative input terminal of the second boost converter circuit is connected to a negative electrode PV3-of the third photovoltaic panel and a negative electrode PV4- of the fourth photovoltaic panel.

An anode of a third diode D3 in the first boost converter circuit is connected to the DC negative input terminal of the DC-AC converting circuit, and a cathode of the third diode D3 is connected to an inductor in the first Boost converter circuit. An anode of a fourth diode D4 in the second boost converter circuit is connected to the DC negative input terminal of the DC-AC converting circuit, and a cathode of the fourth diode D4 is connected to an inductor in the second mirror boost converter circuit.

The AC side of the power converter may be connected to a multi-phase (e.g., three-phase as shown in FIG. 5) power grid, and the shunt branch is a multi-phase shunt branch (e.g., three-phase as shown in FIG. 5). The first terminals of the multi-phase shunt branch are connected to output terminals for the multiple phases, respectively, of the power converting circuit. The second terminals of the multi-phase shunt branch are connected to the DC positive input terminal of the power converting circuit. FIG. 5 shows an example in which the shunt branch comprises a respective diode for each phase. In an embodiment, each second terminal of the DC-AC converting circuit is connected to a first terminal of a respective filtering inductor L, and the shunt branch 200 is connected between the second terminals of the filtering inductors L and the DC positive input terminal.

As shown in FIG. 5, the diode D3 and the diode D4 in the two Boost converter circuits are both connected to the DC negative input terminal of the DC-DC converting circuits. Hence, the shunt branch 200 is connected between the DC positive input terminal and the output terminal of the power converting circuit. When the DC positive input terminal is subject to a ground fault, paths of the short-circuit current are indicated by dashed lines as shown in FIG. 5. The short-circuit current flows from the output terminal of the power converting circuit to the DC positive input terminal, and then to the power grid via the DC positive input terminal of the boost converter circuit.

As shown by the dashed lines, a part of the short-circuit current flows through the DC-AC converting circuit (e.g., a bridge arm in the DC-AC converting circuit), and another part of the short-circuit current flows through the shunt branch 200. The shunt branch 200 shunts the short-circuit current effectively and reduces the current flowing through the DC-AC converting circuit. Hence, the components in the power converter are better protected.

Hereinafter it is taken as an example that the DC-AC converting circuit comprises the T-type inverter circuit.

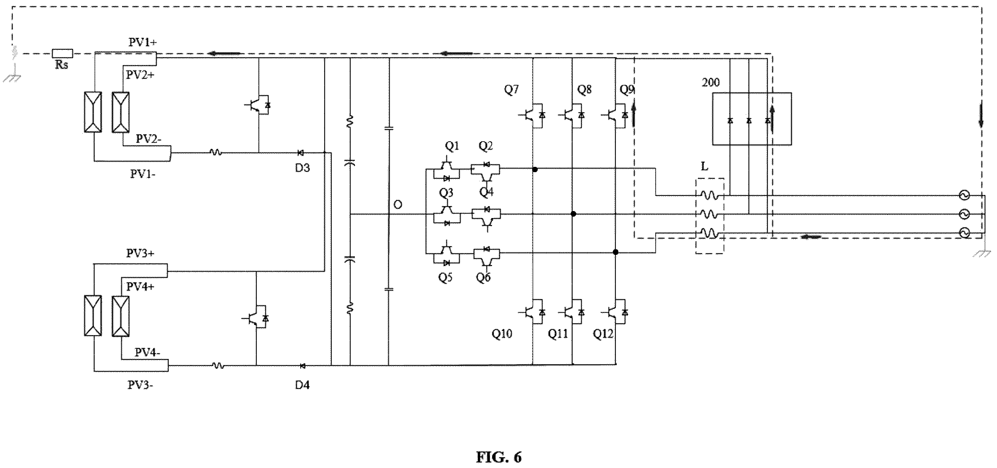

Reference is made to FIG. 6, which is a schematic diagram of a power converter in which a DC-AC converting circuit is a T-type inverter circuit according to an embodiment of the present disclosure.

As shown in FIG. 6, the DC-AC converting circuit is the T-type inverter circuit, and each phase of the three-phase T-type inverter circuit is provided with two "horizontal" switching transistors that are connected in series and two "longitudinal" switching transistors that are connected in series. The two longitudinal switching transistors form a bridge arm. Details of topology of the T-type inverter circuit may refer to the related art and are not illustrated herein. Exemplary connection can be read directly from FIG. 6.

Paths of the short-circuit current are indicated by the dashed lines in FIG. 6. A first short-circuit current flows from the power grid to the first terminal of the shunt branch 200, and then via the second terminal of the shunt branch 200 to the DC positive input terminal. A second short-circuit current flows from the power grid to the second terminal of the filtering inductor L, then via the filtering inductor L and a ninth switching transistor Q9 in the T-type inverter circuit, and then merges with the first short-circuit current and to the DC positive input terminal.

As shown by the dashed line, a part of the short-circuit current can flow through the shunt branch 200, and thus the shunt branch 200 shunts the short-circuit current effectively and reduces the current flowing through the switching transistor in the T-type inverter circuit. The components in the power converter are better protected.

Hereinabove illustrated are examples in which the shunt branch comprises the diode(s). Hereinafter examples in which the shunt branch comprises controllable switch(es) are illustrated. A type of the controllable switch is not limited here, as long as it is capable of conducting a forward current while blocking a reverse current. As an example, the controllable switch may be a thyristor or a metal-oxide-semiconductor field-effect transistor (MOSFET). It is taken as an example that the power converting circuit comprises the DC-DC converting circuit and the DC-AC converting circuit, the DC-DC converting circuit comprises a boost converter circuit (either the non-mirrored or mirrored version as described above), and the DC-AC converting circuit comprises a T-type inverter circuit.

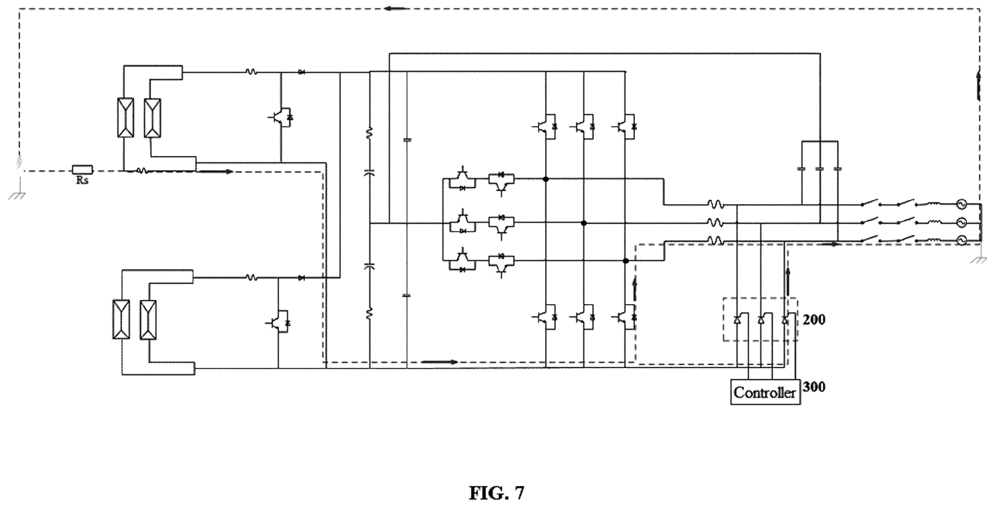

Reference is made to FIG. 7, which is a schematic diagram illustrating that a power converter in which a shunt branch comprises a unidirectional thyristor according to an embodiment of the present disclosure. When the unidirectional thyristor is turned on to allow a forward current to pass can be controlled. The unidirectional thyristor is automatically turned off to block the forward current at zero-crossing of a voltage (e.g., a voltage of a phase line to which the thyristor is connected). A structure of the unidirectional thyristor determines that a reverse current is always blocked.

FIG. 7 shows an example in which the DC-DC converting circuit is a boost converter circuit. The diode is connected to the DC positive input terminal, and the shunt branch 200 is connected between the DC negative input terminal and the output terminal of the DC-AC converting circuit.

In some embodiments, the power converter further comprises a controller 300 when the shunt branch 200 comprises the unidirectional thyristor. The controller 300 is configured for turning on the unidirectional thyristor when the DC negative (or positive) input terminal is short-circuited to ground. The on-state unidirectional thyristor provides a short circuit current path for reducing the short circuit flowing through the DC-AC converting circuit. Hence, the components such as switching transistors in the DC-AC converting circuit are protected.

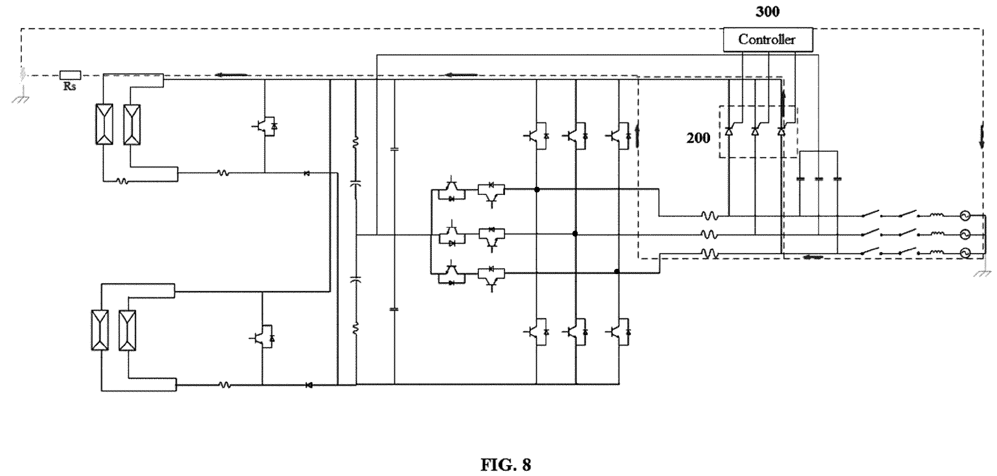

Reference is made to FIG. 8, which is a schematic diagram of a power converter in which a shunt branch comprises a unidirectional thyristor according to an embodiment of the present disclosure.

The DC-DC converting circuit as shown in FIG. 8 is a mirror version of the boost converter circuit as shown in FIG. 7. A diode is connected to the DC negative input terminal, and the shunt branch 200 is connected between the DC positive input terminal and the output terminal of the DC-AC converting circuit.

In some embodiments, the power converter further comprises a controller 300 when the shunt branch 200 comprises the unidirectional thyristor. The controller 300 is configured for turning on the unidirectional thyristor when the DC positive (or negative) input terminal is short-circuited to ground. The on-state unidirectional thyristor provides a short circuit current path for reducing the short circuit flowing through the DC-AC converting circuit. Hence, the components such as switching transistors in the DC-AC converting circuit are protected.

FIGs. 7 and 8 both illustrate examples in which the shunt branch comprises the unidirectional thyristor. Hereinafter illustrated are examples in which the shunt branch comprises a bidirectional thyristor. Different from the unidirectional thyristor, the bidirectional thyristor can be turned on to allow current flowing bidirectionally. As an example, the bidirectional thyristor may be turned on to allow a forward current or a reverse current to pass, which is more flexible. A direction in which the bidirectional thyristor conducts when being turned on may be controlled according to a specific requirement on a circuit.

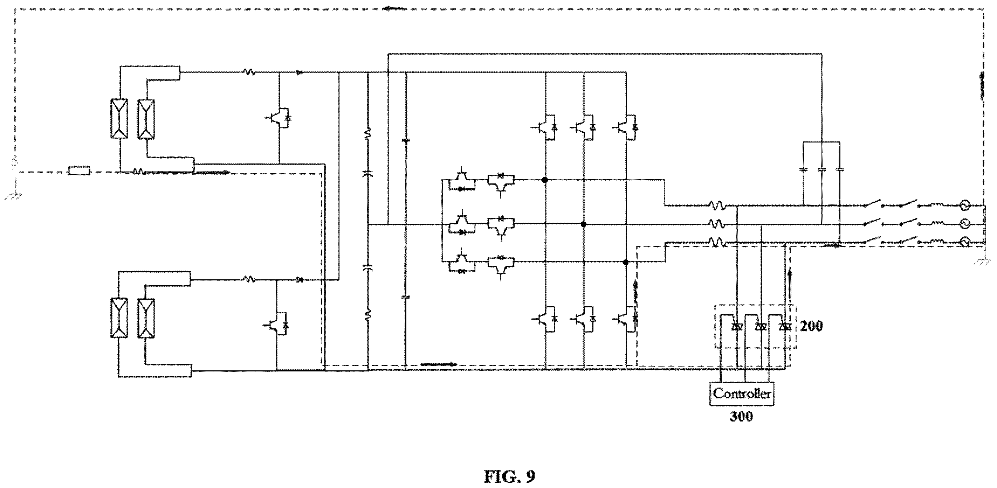

Reference is made to FIG. 9, which is a schematic diagram of a power converter in which a shunt branch comprises a bidirectional thyristor according to an embodiment of the present disclosure.

The circuitry as shown in FIG. 9 differs from that as shown in FIG. 7 in that the thyristor in the shunt branch 200 is a bidirectional thyristor.

In some embodiments, the power converter further comprises a controller 300 when the shunt branch 200 comprises the bidirectional thyristor. The controller 300 is configured for turning on the bidirectional thyristor when the DC positive (or negative) input terminal is short-circuited to ground. The on-state bidirectional thyristor provides an additional short circuit current path as shown in FIG. 9 for reducing the short circuit flowing through the DC-AC converting circuit. Hence, the components such as switching transistors in the DC-AC converting circuit are protected.

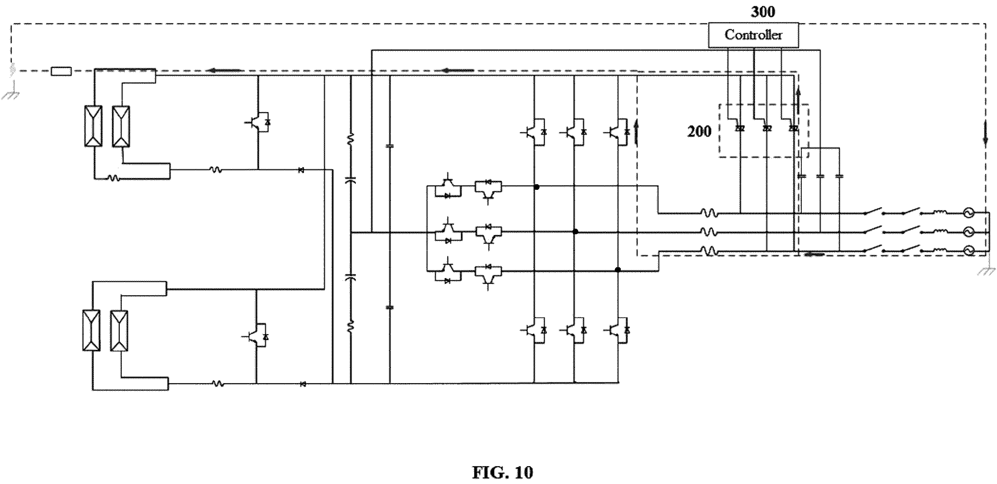

Reference is made to FIG. 10, which is a schematic diagram of a power converter in which a shunt branch comprises a bidirectional thyristor according to another embodiment of the present disclosure.

The circuitry as shown in FIG. 10 differs from that as shown in FIG. 8 in that the thyristor in the shunt branch 200 is a bidirectional thyristor.

In some embodiments, the power converter further comprises a controller 300 when the shunt branch 200 comprises the bidirectional thyristor. The controller 300 is configured for turning on the bidirectional thyristor when the DC positive (or negative) input terminal is short-circuited to ground. The on-state bidirectional thyristor provides an additional short circuit current path as shown in FIG. 10 for reducing the short circuit flowing through the DC-AC converting circuit. Hence, the components such as switching transistors in the DC-AC converting circuit are protected.

Hereinabove illustrated are some examples in which the DC-AC converting circuit in the power converter is the T-type inverter circuit. Hereinafter illustrated are some other topologies of the DC-AC converting circuit.

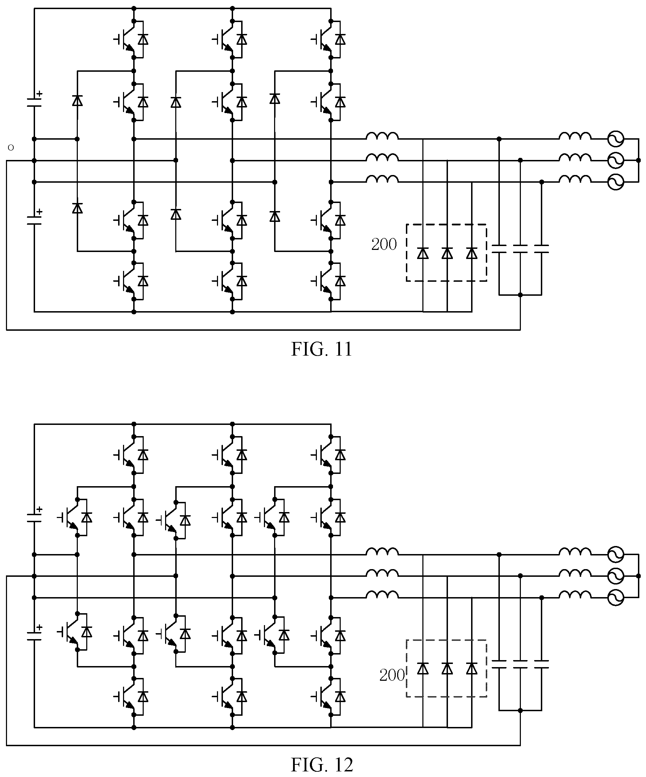

Reference is made to FIG. 11, which is a schematic diagram of a power converter in which a DC-AC converting circuit is a passive NPC circuit according to an embodiment of the present disclosure.

The topology as shown FIG. 11 is adaptable to the aforementioned non-mirror version of the boost converter circuit that serves as the DC-DC converting circuit (not shown in the figure) for negative-short-to-ground protection. FIG. 11 shows an example in which the shunt branch 200 comprises the diode. It is appreciated that the shunt branch may additionally or alternatively comprise the controllable switch such as a unidirectional thyristor or a bidirectional thyristor.

Reference is made to FIG. 12, which is a schematic diagram of a power converter in which a DC-AC converting circuit is an active NPC circuit according to an embodiment of the present disclosure.

The topology as shown FIG. 12 is adaptable to the aforementioned non-mirror version of the boost converter circuit that serves as the DC-DC converting circuit (not shown in the figure) for negative-short-to-ground protection. FIG. 12 shows an example in which the shunt branch 200 comprises the diode. It is appreciated that the shunt branch may additionally or alternatively comprise the controllable switch such as a unidirectional thyristor or a bidirectional thyristor.

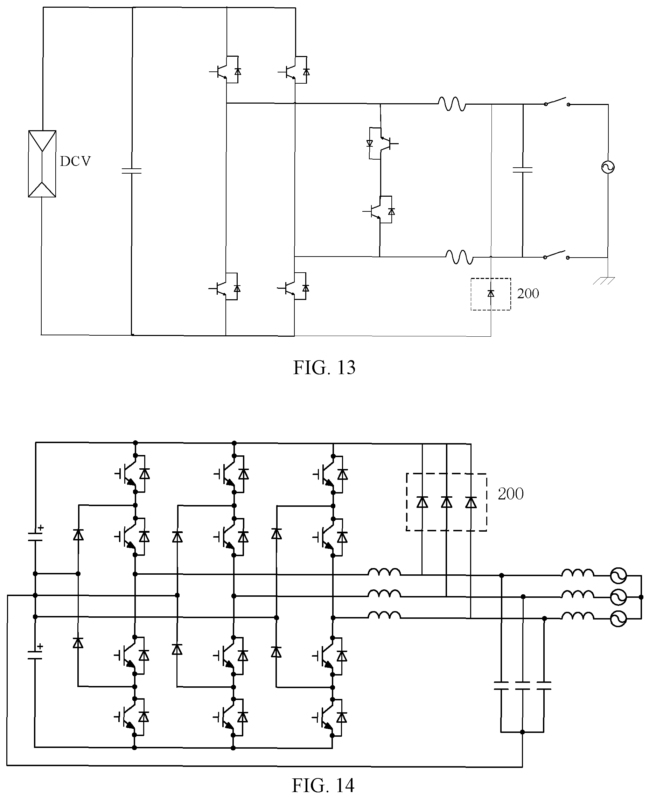

Reference is made to FIG. 13, which is a schematic diagram of a power converter in which a DC-AC converting circuit is a HERIC circuit according to an embodiment of the present disclosure.

The topology as shown FIG. 13 is adaptable to the aforementioned non-mirror version of the boost converter circuit that serves as the DC-DC converting circuit (not shown in the figure) for negative-short-to-ground protection. FIG. 13 shows an example in which the shunt branch 200 comprises the diode. It is appreciated that the shunt branch may additionally or alternatively comprise the controllable switch such as a unidirectional thyristor or a bidirectional thyristor. A type of the DC source DCV as shown in FIG. 13 is not limited here. The DC source DCV may be a photovoltaic panel, a battery, or a DC source of another type.

Hereinafter illustrated are some topologies adaptable to the aforementioned mirror version of the boost converter circuit that serves as the DC-DC converting circuit for positive-short-to-ground protection. It is taken as an example that the shunt branch comprises the diode. It is appreciated that the shunt branch may additionally or alternatively comprise the controllable switch such as a unidirectional thyristor or a bidirectional thyristor.

Reference is made to FIG. 14, which is a schematic diagram of a power converter in which a DC-AC converting circuit is a passive NPC circuit according to another embodiment of the present disclosure. The topology as shown FIG. 14 is adaptable to the aforementioned mirror version of the boost converter circuit that serves as the DC-DC converting circuit (not shown in the figure) for positive-short-to-ground protection. FIG. 14 shows an example in which the shunt branch 200 comprises the diode.

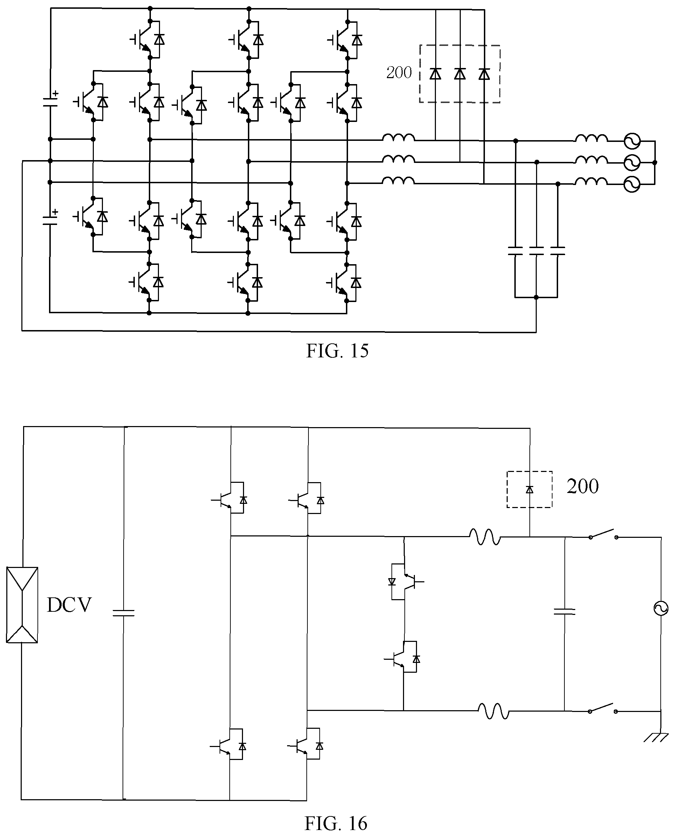

Reference is made to FIG. 15, which is a schematic diagram of a power converter in which a DC-AC converting circuit is an active NPC circuit according to another embodiment of the present disclosure. The topology as shown FIG. 15 is adaptable to the aforementioned mirror version of the boost converter circuit that serves as the DC-DC converting circuit (not shown in the figure) for positive-short-to-ground protection. FIG. 15 shows an example in which the shunt branch 200 comprises the diode.

Reference is made to FIG. 16, which is a schematic diagram of a power converter in which a DC-AC converting circuit is a HERIC circuit according to another embodiment of the present disclosure. The topology as shown FIG. 16 is adaptable to the aforementioned mirror version of the boost converter circuit that serves as the DC-DC converting circuit (not shown in the figure) for positive-short-to-ground protection. FIG. 16 shows an example in which the shunt branch 200 comprises the diode. A type of the DC source DCV as shown in FIG. 16 is not limited here. The DC source DCV may be a photovoltaic panel, a battery, or a DC source of another type.

Hereinabove illustrated are some examples in which the power converting circuit described comprises the DC-DC converting circuit and the DC-AC converting circuit. Hereinafter illustrated is an example in which the power converting circuit comprises only the DC-DC converting circuit.

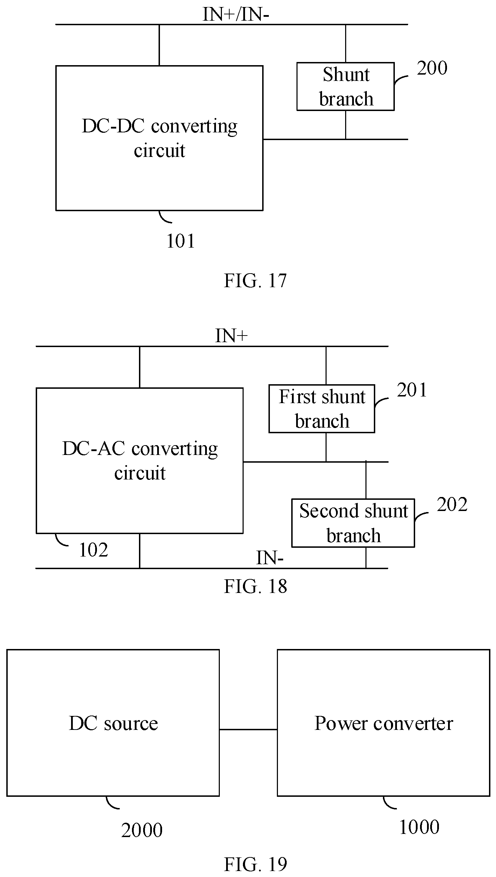

Reference is made to FIG. 17, which is a schematic diagram of a power converter according to another embodiment of the present disclosure. The power converting circuit comprises the DC-DC converting circuit 101.

A first terminal of the DC-DC converting circuit 101 is configured for connecting a DC source, and a second terminal of the DC-DC converting circuit 101 serves as an output terminal of the power converting circuit. That is, the second terminal of the DC-DC converting circuit 101 is connected to the first terminal of the shunt branch 200. Whether the second terminal of the shunt branch 200 is connected to the DC positive input terminal IN+ or the DC negative input terminal IN- depends on a topology of the DC-DC converting circuit 101. Details may refer to description of the foregoing embodiments and are not repeated here.

Hereinafter illustrated is an example in which the power converting circuit comprises only the DC-AC converting circuit.

Reference is made to FIG. 18, which is a schematic diagram of a power converter according to another embodiment of the present disclosure. The power converting circuit comprises a single stage, that is, comprises only the DC-AC converting circuit 102 and no DC-DC converting circuit.

In some embodiments, the DC-AC converting circuit comprises two shunt branches. Reference is further made to FIG. 18, The two shunt branches are a first shunt branch 201 and a second shunt branch 202.

A first terminal of the DC-AC converting circuit 102 is configured for connecting a DC source, and a second terminal of the DC-AC converting circuit 102 serves as an output terminal of the power converting circuit. The second terminal of the DC-AC converting circuit 102 is connected to the DC positive input terminal IN+ via the first shunt branch 201 and is connected to the DC negative input terminal IN- via the second shunt branch 202. When positive-short-to-ground fault occurs at the DC side of the DC-AC converting circuit 102, the short circuit current would be shunted in a positive half cycle. When negative-short-to-ground fault occurs at the DC side of the DC-AC converting circuit 102, the short circuit current would be shunted in a negative half cycle.

As an example, when the DC positive/negative input terminal of the power converting circuit is short-circuited, a controller turns on the controllable switch connected between the output terminal and the DC positive input terminal of the power converter in the positive half cycle of a voltage at the output terminal of the power converter circuit (e.g., a grid voltage). Similarly, when the DC positive/negative input terminal of the power converting circuit is short-circuited, a controller turns on the controllable switch connected between the output terminal and the DC negative input terminal of the power converter in the negative half cycle of the voltage at the output terminal of the power converter circuit (e.g., a grid voltage)

When the DC positive or negative input terminal of the power converting circuit is short circuited, the controller may shut down the power converting circuit (e.g., turn off all the transistors in it) to protect the components in the power converting circuit, and then turn on the corresponding shunt branch to shunt the short circuit current. The control on a specific controllable switch may not be performed according to a type of the short-circuit fault (i.e., the positive-short-to-ground or the negative-short-to-ground fault) but performed according to a position at which such controllable switch is connected (i.e., between the DC positive input terminal or the DC negative input terminal and the output terminal).

A power supply system is further provided according to embodiments of the present disclosure. The power supply system is based on the power converter according to any foregoing embodiment.

Reference is made to FIG. 19, which is a schematic diagram of a power supply system according to an embodiment of the present disclosure. The power supply system comprises a power converter 1000, which is any foregoing power converter. A DC side of the power converter 1000 is configured for connecting the DC source 2000, and the DC source 2000 is a photovoltaic panel and/or a battery.

In the power supply system, the shunt branch is provided between the output terminal of the power converting circuit and the DC positive/negative input terminal of the power converting circuit. Besides flowing through the power converting circuit, the short-circuit current can also flow through the shunt branch when a ground fault occurs at the DC side. That is, the shunt branch provides a path for shunting the short-circuit current. The current flowing through the power converting circuit is reduced, so that components in the power converting circuit can be better protected. As an example, a risk of the semiconductor components in the power converting circuit failing due to overcurrent is reduced. Normal operation of the power supply system is guaranteed, and the costs of the power supply system are reduced.

A method for controlling a power inverter is further provided according to an embodiment of the present disclosure. The method is based on the power converter and/or the power supply system according to any foregoing embodiment.

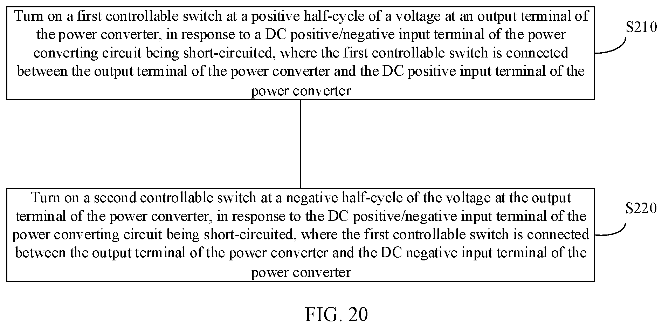

Reference is made to FIG. 20, which is a flowchart of a method for controlling a power converter according to an embodiment of the present disclosure.

As an object of the control, the power converter comprises a shunt branch, and the shunt branch comprises controllable switch(es) configured for blocking a respective reverse current.

The method comprises following step S210 and/or step S220.

In step S210, a first controllable switch is turned on at a positive half-cycle of a voltage at an output terminal of the power converter, in response to a DC positive input terminal of the power converting circuit being short-circuited. The first controllable switch is connected between the output terminal of the power converter and the DC positive (or negative) input terminal of the power converter. The voltage may be a grid voltage.

In step S220, a second controllable switch is turned on at a negative half-cycle of the voltage at the output terminal of the power converter, in response to a DC negative (or positive) input terminal of the power converting circuit being short-circuited. The second controllable switch is connected between the output terminal of the power converter and the DC negative input terminal of the power converter.

A position of the shunt branch in the power converter is not specifically limited here, and it is only necessary to control the controllable switch in the shunt branch. A position of the shunt branch may depend on a specific topology of the power converter. As an example, the position may depend on whether the boost converter circuit in the power converter is the mirrored version or the non-mirrored version as described above. As another example, the position may depend on whether the power converter comprises only the DC-AC converting circuit or comprise both a DC-DC converting circuit and the DC-AC converting circuit. How the shunt branch is connected may refer to the foregoing power converter embodiments and is not repeated herein. As an example, the shunt branch comprising the controllable switch is connected between the output terminal and the DC positive/negative input terminal of the power converting circuit. As another example, the shunt branches, each comprises a respective controllable switch, are connected between the output terminal and the DC positive input terminal of the power converting circuit and between the output terminal and the DC negative input terminal of the power converter, respectively. Therefore, when a ground fault occurs at the DC side, the short-circuit current can flow through the shunt branch, that is, the shunt branch shunts the short-circuit current. The current flowing through the power converting circuit is reduced, so that components in the power converting circuit can be better protected. For example, the semiconductor components in the power converting circuit are less likely to fail due to overcurrent.

The embodiments of the present disclosure are described in a progressive manner, and each embodiment places emphasis on the difference from other embodiments. Therefore, one embodiment can refer to other embodiments for the same or similar parts.

According to the description of the disclosed embodiments, those skilled in the art can implement or use the present disclosure. Various modifications made to these embodiments may be obvious to those skilled in the art, and the general principle defined herein may be implemented in other embodiments without departing from the spirit or scope of the present disclosure. Therefore, the present disclosure is not limited to the embodiments described herein but conforms to a widest scope in accordance with principles and novel features disclosed in the present disclosure.

## Claims

1. A power converter, comprising a power converting circuit and a shunt branch, **characterized in that**:
a first terminal of the shunt branch is connected to an output terminal of the power converting circuit; and
one of:
a second terminal of the shunt branch is connected to a direct-current, DC, positive input terminal of the power converting circuit, and the shunt branch is configured to shunt a current flowing from the output terminal of the power converter circuit to the DC positive input terminal of the power converting circuit in response to the DC positive input terminal or a DC negative input terminal of the power converting circuit being short-circuited; or
the second terminal of the shunt branch is connected to the DC negative input terminal of the power converting circuit, and the shunt branch is configured to shunt a current flowing from the DC negative input terminal of the power converting circuit to the output terminal of the power converter circuit in response to the DC negative input terminal or the DC positive input terminal of the power converting circuit being short-circuited.

2. The power converter according to claim 1, **characterized in that**:
the shunt branch comprises unidirectional conduction circuitry that blocks a reverse current;
in a case that the second terminal of the shunt branch is connected to the DC positive input terminal of the power converting circuit, a positive terminal of the unidirectional conduction circuitry is connected to the first terminal of the shunt branch, and a negative terminal of the unidirectional conduction circuitry is connected to the second terminal of the shunt branch; and
in a case that the second terminal of the shunt branch is connected to the DC negative input terminal of the power converting circuit, a positive terminal of the unidirectional conduction circuitry is connected to the second terminal of the shunt branch, and a negative terminal of the unidirectional conduction circuitry is connected to the first terminal of the shunt branch.

3. The power converter according to claim 2, **characterized in that** the unidirectional conduction circuitry comprises at least one of:
a diode, or
a controllable switch configured for blocking the reverse current.

4. The power converter according to any one of claims 1 to 3, **characterized in that** the power converting circuit comprises at least one of a DC-DC converting circuit or a direct-current-alternating-current, DC-AC, converting circuit.

5. The power converter according to claim 4, **characterized in that**:
the power converting circuit comprises the DC-DC converting circuit and the DC-AC converting circuit; and
an input terminal of the DC-DC converting circuit is configured for connecting to a DC source, an output terminal of the DC-DC converting circuit is connected to an input terminal of the DC-AC converting circuit, and an output terminal of the DC-AC converting circuit serves as the output terminal of the power converting circuit.

6. The power converter according to claim 4, **characterized in that**:
the power converting circuit comprises the DC-DC converting circuit;
the DC-DC converting circuit comprises a diode connected to the DC positive input terminal, and a forward direction of the diode points from the DC positive input terminal to an output terminal of the DC-DC converting circuit; and
the second terminal of the shunt branch is connected to the DC negative input terminal.

7. The power converter according to claim 4, **characterized in that**:
the power converting circuit comprises the DC-DC converting circuit;
the DC-DC converting circuit comprises a diode connected to the DC negative input terminal, and a forward direction of the diode points from an output terminal of the DC-DC converting circuit to the DC negative input terminal;
the second terminal of the shunt branch is connected to the DC positive input terminal.

8. The power converter according to any one of claims 4 to 7, **characterized in that**:
the power converting circuit is a single-stage power converting circuit comprising the DC-AC converting circuit;
an input terminal of the DC-AC converting circuit is configured for connecting a DC source, and an output terminal of the DC-AC converting circuit is configured for connecting a power grid or a load;
the shunt branch comprises a first shunt branch and a second shunt branch;
a first terminal of the first shunt branch is connected to the output terminal of the power converting circuit, and a second terminal of the first shunt branch is connected to a positive terminal of the input terminal of the DC-AC converting circuit; and
a first terminal of the second shunt branch is connected to the output terminal of the power converting circuit, and a second terminal of the second shunt branch is connected to a negative terminal of the input terminal of the DC-AC converting circuit.

9. The power converter according to any one of claims 4 to 8, **characterized in that**:
the power converting circuit comprises the DC-AC converting circuit, and the power converter further comprises a filtering inductor; and
a first terminal of the filtering inductor is connected to an output terminal of the DC-AC converting circuit, and a second terminal of the filtering inductor serves as the output terminal of the power converting circuit.

10. The power converter according to claim 3, **characterized in that**:
the shunt branch comprises the controllable switch, and the shunt branch is connected between the output terminal of the power converting circuit and the DC positive input terminal of the power converting circuit; and
the power converter further comprises a controller configured for turning on the controllable switch in a positive half-cycle of a voltage at the output terminal of the power converting circuit.

11. The power converter according to claim 3, **characterized in that**:
the shunt branch comprises the controllable switch, and the shunt branch is connected between the output terminal of the power converting circuit and the DC negative input terminal of the power converting circuit; and
the power converter further comprises a controller configured for turning on the controllable switch in a negative half-cycle of voltage at the output terminal of the power converting circuit.

12. The power converter according to any one of claims 1 to 11, **characterized in that**:
an alternating-current side of the power converter comprises N phases, N is an integer greater than or equal to 1,
a quantity of the shunt branches is N, and
the N shunt branches are for the N phases, respectively.

13. A method for controlling a power converter, **characterized in that**:
the power converter comprises a shunt branch, and the shunt branch comprises at least one controllable switch, each of which is configured for blocking a respective reverse current; and
the method comprises at least one of:
turning on a first controllable switch of the at least one controllable switch in a positive half-cycle of a grid voltage in response to a short-circuit of a direct-current, DC, positive input terminal or a DC negative input terminal of the power converting circuit, wherein the first controllable switch is connected between an output terminal of the power converter and the DC positive input terminal of the power converter; or
turning on a second controllable switch of the at least one controllable switch in a negative half-cycle of a grid voltage in response to a short-circuit of the DC negative input terminal or the DC positive input terminal of the power converting circuit, wherein the second controllable switch is connected between an output terminal of the power converter and the DC negative input terminal of the power converter.

14. A power supply system, **characterized by** comprising:
the power converter according to any one of claims 1 to 12, wherein:
a direct-current, DC, side of the power converter is configured for connecting a DC power source, and the DC power source is at least one of a photovoltaic panel or a battery.
